Europäisches Patentamt

European Patent Office

Office européen des brevets

(19)

(11) Veröffentlichungsnummer: **0 096 093**
**B1**

(12) **EUROPÄISCHE PATENTSCHRIFT**

(45) Veröffentlichungstag der Patentschrift:
**04.12.85**

(51) Int. Cl.⁴: **F 23 D 14/52**, B 23 K 7/02

(21) Anmeldenummer: **82105052.3**

(22) Anmeldetag: **09.06.82**

(54) Verfahren zum Beseitigen von Brennbärten an Stranggussstücken und Düse zu seiner Durchführung.

(43) Veröffentlichungstag der Anmeldung:
21.12.83 Patentblatt 83/51

(45) Bekanntmachung des Hinweises auf die Patenterteilung:
04.12.85 Patentblatt 85/49

(84) Benannte Vertragsstaaten:
DE

(56) Entgegenhaltungen:
DE - A - 1 629 960
DE - A - 2 018 779
DE - A - 2 831 152
GB - A - 1 154 945

(73) Patentinhaber: **AUTE Gesellschaft für autogene Technik mbH, Zollikerstrasse 228, CH-8029 Zürich (CH)**

(72) Erfinder: **Hennecke, Franz, Ing., Zum Scharfenberg 33, D-5770 Arnsberg (DE)**

(74) Vertreter: **Blumbach Weser Bergen Kramer Zwirner Hoffmann Patentanwälte, Sonnenbergerstrasse 43, D-6200 Wiesbaden 1 (DE)**

## Beschreibung

Die Erfindung betrifft ein Verfahren zum Beseitigen von Brennbärten an Stranggußstücken, bei dem der Bart aufgeschmolzen und durch die kinetische Energie eines Gasstrahles weggeblasen wird.

Bei Stranggießanlagen wird der erzeugte Strangguß unterteilt. Bei den dabei zum Einsatz kommenden Brennschneidmaschinen entstehen längs der Schnittlinien an der Unterseite der Stranggußstücke Schlackenbärte, deren nachträgliches Entfernen mit mechanischen Mitteln durch den damit verbundenen Zeit- und Maschinenaufwand hohe zusätzliche Kosten bei der Herstellung von Strangguß verursacht.

Es ist daher bereits vorgeschlagen worden, ohne mechanische Bearbeitung mittels Düsen Wärme zuzuführen, um den Brennbart aufzuschmelzen und ihn mit kinetischer Energie zu entfernen (DE-A-2 831 152). Dabei waren komplizierte Düsenanordnungen erforderlich, die einerseits das Aufschmelzen des Schlackenbartes ermöglichten und andererseits sein Wegblasen bewerkstelligen konnten. Entsprechende Düsenanordnungen waren sehr aufwendig und mußten unter einer bestimmten Winkeleinstellung zum Werkstück und untereinander eingerichtet werden. Abgesehen davon, daß im praktischen Betrieb die optimale Einstellung oft Schwierigkeiten machte bzw. nicht zu erreichen war, empfand man die Entfernung der Brennbärte auch insofern als unbefriedigend, als ein größerer Materialverlust an dem Werkstück, insbesondere an seiner Ecke, eintrat.

Der Erfindung liegt daher die Aufgabe zugrunde, ein Verfahren zur Brennbartbeseitigung verfügbar zu machen, bei dem komplizierte Düsenanordnungen vermieden sind und der Brennbart in optimaler Weise ohne große Materialverluste am Werkstück beseitigt werden kann.

Die Erfindung zeichnet sich dadurch aus, daß bei einem Verfahren der eingangs genannten Art aus zwei zueinander parallel angeordneten Gruppen von Brenngasaustrittsöffnungen Brenngas und aus einem dazwischenliegenden Schlitz Sauerstoff auf die Brennbärte gerichtet wird, wobei die Sauerstoffzuführung in den in Längsrichtung gegenüberliegenden Endbereichen des Schlitzes erhöht wird.

In ihrer weiteren Ausbildung schlägt die Erfindung vor, daß an den gegenüberliegenden Endbereichen des Sauerstoffschlitzes durch zusätzliche Düsen Sauerstoff, Druckluft, Dampf und/oder Wasser auf den Brennbart gerichtet wird, um die Schlacke zurückzudrängen.

Dabei hat sich als zweckmäßig erwiesen, daß die Medien unter einem Winkel von 45° zu den Werkstückskanten auf den Brennbart gerichtet werden.

Die Erfindung macht gleichermaßen eine Düse durch Durchführung des Verfahrens verfügbar. Diese Düse zeichnet sich dadurch aus, daß eine obere und untere, Brenngasaustrittsöffnungen aufweisende Düsenplatte und ein dazwischen angeordneter Sauerstoffschlitz vorgesehen sind und daß der Sauerstoffschlitz an seinen sich in Längsrichtung gegenüberliegenden Endbereichen konusartig von einer Verteilerkammer zur Austrittsöffnung sich verjüngt.

In vorteilhafter Weise münden in die Mischkammer mehrere Sauerstoffzuleitungen ein.

Dabei sind zweckmäßig auf beiden Längsseiten des Sauerstoffschlitzes, auf seine Länge begrenzt, Brenngasöffnungen vorgesehen.

In einer vorteilhaften Weiterbildung der Erfindung ist vorgesehen, daß an beiden Längsseiten der Düse einfache Runddüsen vorgesehen sind, um die Schlacke zurückzudrängen.

Diese Düsen können mit Sauerstoff, Preßluft oder auch Dampf und/oder Wasser versorgt werden.

In zweckmäßiger Weise nimmt der Sauerstoffschlitz der Düse zur Brennbartkante eine 45°-Lage ein.

Mit Vorteil ist die Düse in Vorschubrichtung mit 30° zur Werkstückfläche geneigt.

Die Erfindung soll anhand eines Ausführungsbeispiels unter Bezugnahme auf die Zeichnung näher erläutert werden.

In der Zeichnung zeigt

Fig. 1 eine Düse im Einsatz zur Brennbartbeseitigung an einem Werkstück in schematischer Darstellung und

Fig. 2 eine Draufsicht auf die Öffnung der Düse nach Fig. 1.

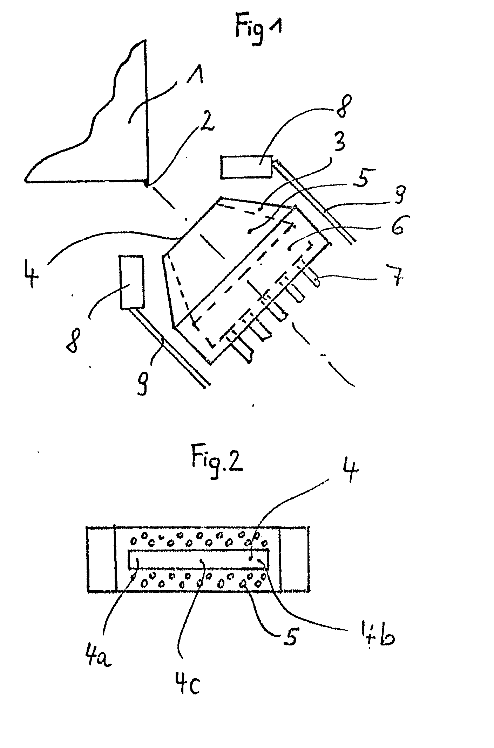

In Fig. 1 ist ein Werkstück 1 mit einem Brennbart 2 dargestellt. Zur Entfernung des Brennbartes ist in einem Abstand von ca. 15 bis 25 mm eine Düse 3 angeordnet, die einen Sauerstoffschlitz 4 aufweist.

Wie Fig. 2 zeigt, ist der Sauerstoffschlitz an seinen Längsseiten, etwa begrenzt durch die Länge des Sauerstoffschlitzes 4, mit zwei Reihen Brenngasöffnungen 5 versehen. Wie aus Fig. 1 in gestrichelter Darstellung zu entnehmen ist, ist der Sauerstoffschlitz 4 das äußere Ende eines Konus 10, der von einer Verteilerkammer 6 ausgeht, in die eine Anzahl Zuleitungen 7 einmündet. Der durch die Zuleitungen 7 in die Verteilerkammer 6 einströmende Sauerstoff wird so an den in Längsrichtungen gegenüberliegenden Endbereichen des Sauerstoffschlitzes 4 durch die Konusführung 10 zu einem erhöhten Ausströmen gebracht, so daß sich in dem Sauerstoffschlitz 4 ein Mengenprofil ausbildet, das an den in Längsrichtung gegenüberliegenden Endbereichen 4a und 4b Maximalpunkte ausbildet, zwischen denen sich ein Tal geringerer Sauerstoffmenge in der Mitte 4c des Sauerstoffschlitzes 4 ausbildet. Auf diese Weise wird erreicht, daß die von der Ecke des Werkstücks 1 auf die Seiten abfließende Schlacke aufgeschmolzen wird, ohne daß die Ecke des Werkstücks 1 im wesentlichen an Materialverlust leidet.

Um die Schlacke zurückzudrängen, sind auf beiden Längsseiten der Düse 3 einfache Runddüsen 8 vorgesehen, die mit Zuleitungen 9 versehen sind und — wie im einzelnen nicht dargestellt — mit der Düse 3 zu einer Einheit verbunden sind. Durch die Zuleitungen 9 kann Sauerstoff oder Preßluft, aber auch Dampf und/oder H2O geführt werden.

Mit der beschriebenen Düse ist in optimaler Weise eine Beseitigung des Schlackenbartes möglich. Ein Aufschmelzen und Wegblasen erfolgt relativ langsam mit einer Geschwindigkeit von 3 bis 4 m/min. Gute Ergebnisse wurden erzielt mit einem Druck in der nicht dargestellten Brenngaszuführung von 2,5 bar bei einem Heizsauerstoff von 6 bar und einem Blassauerstoff von 1,5 bar. Bei der Heizung mit Brenngasen trat somit nur ein geringfügiger Flämmeffekt auf. Mit einer Erhöhung des Sauerstoffdrucks auf 3,5 bar bei einem Heizsauerstoff auf 4 bar und dem Brenngas auf 5 bar war eine Flämmung bei 8,5 bis 13,5 m/min möglich, wobei die Werkstückecken eine Rundung erhielten mit einem Radius von 2 bis 4 mm. An den Seiten der Werkstückecken trat ein Materialverlust von 1 bis 2 mm auf.

Wie Fig. 1 zeigt, wird die Düse 3 so angeordnet, daß die zum Austrittsende 4 durch die Ecke des Werkstücks 1 verlaufende Parallele mit den Seitenflächen des Werkstücks 1 einen Winkel von 45° einschließt. In Arbeitsrichtung bildet die Düse zur Bewegungsebene einen Winkel von etwa 30°.

Neben den bereits geschilderten Vorteilen benötigt die erfindungsgemäße Düse auch einen geringen Platzaufwand, so daß sie ohne Schwierigkeiten auch bei vorhandenen Anlagen Einsatz finden kann.

**Patentansprüche**

1. Verfahren zum Beseitigen von Brennbärten an Stranggußstücken, bei dem der Bart aufgeschmolzen und durch die kinetische Energie eines Gasstrahles weggeblasen wird, dadurch gekennzeichnet, daß aus zwei zueinander parallel angeordneten Gruppen von Brenngasaustrittsöffnungen (5) Brenngas und aus einem dazwischenliegenden Schlitz (4) Sauerstoff auf die Brennbärte (2) gerichtet wird, wobei die Sauerstoffzuführung in den in Längsrichtung gegenüberliegenden Endbereichen (4a, 4b) des Schlitzes (4) erhöht wird.

2. Verfahren nach Anspruch 1, dadurch gekennzeichnet, daß an den gegenüberliegenden Endbereichen (4a, 4b) des Sauerstoffschlitzes (4) durch zusätzliche Düsen (8) Sauerstoff, Druckluft, Dampf und/oder Wasser auf den Brennbart (2) gerichtet wird.

3. Verfahren nach Anspruch 1 oder 2, dadurch gekennzeichnet, daß die Medien unter einem Winkel von 45° zu den Kanten des Werkstücks (1) auf den Brennbart (2) gerichtet werden.

4. Düse zur Durchführung des Verfahrens nach Anspruch 1, dadurch gekennzeichnet, daß eine obere und untere, Brenngasaustrittsöffnungen (5) aufweisende Düsenplatte und ein dazwischen angeordneter Sauerstoffschlitz (4) vorgesehen ist und daß der Sauerstoffschlitz (4) an seinen sich in Längsrichtung gegenüberliegenden Endbereichen (4a, 4b) konusartig von einer Verteilerkammer (6) zur Austrittsöffnung verjüngt.

5. Düse nach Anspruch 4, dadurch gekennzeichnet, daß in die Verteilerkammer (6) mehrere Sauerstoffzuleitungen (7) einmünden.

6. Düse nach Anspruch 4 oder 5, dadurch gekennzeichnet, daß auf den beiden Längsseiten des Sauerstoffschlitzes (4), auf seine Länge begrenzt, Brenngasöffnungen (5) vorgesehen sind.

7. Düse nach einem der Ansprüche 4 bis 6, dadurch gekennzeichnet, daß an den beiden Längsseiten einfache Runddüsen (8) vorgesehen sind, um die Schlacke zurückzudrängen.

8. Düse nach Anspruch 7, dadurch gekennzeichnet, daß aus den Runddüsen (8) Sauerstoff ausströmt.

9. Düse nach Anspruch 7, dadurch gekennzeichnet, daß aus den Runddüsen (8) Druckluft ausströmt.

10. Düse nach Anspruch 7, dadurch gekennzeichnet, daß aus den Runddüsen (8) Dampf und/oder Wasser ausströmt.

11. Düse nach einem der Ansprüche 1 bis 8, dadurch gekennzeichnet, daß der Sauerstoffschlitz (4) unter 45° zu den Kanten des Werkstückes (1) verläuft.

12. Düse nach einem der Ansprüche 4 bis 11, dadurch gekennzeichnet, daß der Sauerstoffschlitz (4) einen Winkel von 30° zur Bewegungsebene einschließt.

**Claims**

1. Method for removal of cutting beards on strands, in which the beard is liquified and blown away by kinetic energy of a gas jet, characterized in that heating gas from two groups of heating gas discharging holes (5) provided parallel with each other and oxygen from an intermediate slot (4) are directed to the cutting beards (2), and that the oxygen supply is increased in the longitudinally opposite end areas (4a, 4b) of the slot (4).

2. Method according to claim 1, characterized in that at the opposite end areas (4a, 4b) of the oxygen slot (4) oxygen, compressed air, steam and/or water is directed to the cutting beard (2) by additional nozzles (8).

3. Method according to claim 1 or 2, characterized in that the mediums are directed to the cutting beard (2) with an angle of 45° with respect to the edges of the workpiece (1).

4. Nozzle for performing the method according to claim 1, characterized in that an upper and a lower nozzle plate with heating gas discharging holes (5) and an oxygen discharging slot (4) formed inbetween is provided and that the oxygen slot (4) at its longitudinally opposite end areas (4a, 4b) is cone-like enlarged from the discharging slot to a distribution chamber (6).

5. Nozzle according to claim 4, characterized in that several oxygen feeding lines (7) discharge into the distribution chamber (6).

6. Nozzle according to claim 4 or 5, characterized in that at the both longitudinal faces besides the oxygen slot (4) limited to its length heating gas discharging holes (5) are provided.

7. Nozzle according to one of the claims 4—6, characterized in that at the two longitudinal ends simple round-nozzles (8) are provided in order to repress the slag flow.

8. Nozzle according to claim 7, characterized in that out of the round-nozzles (8) oxygen is discharges.

9. Nozzle according to claim 7, characterized in that out of the round-nozzles (8) compressed air is discharged.

10. Nozzle according to claim 7, characterized in that out of the round-nozzles (8) steam and/or water is discharged.

11. Nozzle according to one of the claims 1—8, characterized in that the oxygen slot (4) is arranged 45° to the edges of the workpiece (1).

12. Nozzle according to one of the claims 4—11, characterized in that the oxygen slot (4) is arranged under an angle of 30° in relation to the movement plane.

**Revendications**

1. Procédé pour éliminer des bourrelets produits pendant le découpage au chalumeau de produits obtenus par coulée continue dans lequel le bourrelet est fondu et est soufflé par l'énergie cinétique d'un jet de gaz, caractérisé en ce qu'un jet de gaz combustible sortant de deux groupes d'ouvertures de sortie de gaz combustible (5) disposés parallèlement et un jet d'oxygène sortant d'une fente (4) située entre les deux groupes sont dirigés sur les bourrelets (2), le débit d'arrivée de l'oxygène étant plus élevé dans les parties terminales (4a, 4b) de la fente (4) situées à l'opposé l'une de l'autre dans le sens longitudinal.

2. Procédé selon la revendication 1, caractérisé en ce qu'aux extrémités (4a, 4b) opposées de la fente de sortie d'oxygène (4), de l'oxygène, de l'air comprimé, de la vapeur et/ou de l'eau sont dirigés sur le bourrelet (2) par des buses (8) supplémentaires.

3. Procédé selon la revendication 1 ou 2, caractérisé en ce que les jets de fluide sont dirigés sur le bourrelet (2) sous un angle de 45° par rapport aux bords de la pièce (1).

4. Buse de chalumeau destinée à la mise en oeuvre du procédé selon la revendication 1, caractérisée en ce qu'il est prévu un plateau de buse supérieur et un plateau de buse inférieur comportant des ouvertures de gaz combustible (5) et une fente à oxygène disposée entre ces plateaux, et qu'à ses extrémités (4a, 4b) situées à l'opposé l'une de l'autre dans le sens longitudinal, la fente à oxygène (4) se rétrécit en forme de cône depuis une chambre de distribution (6) jusqu'à l'ouverture de sortie.

5. Buse de chalumeau selon la revendication 4, caractérisée en ce que plusieurs conduites d'arrivée d'oxygène (7) débouchent dans la chambre de distribution (6).

6. Buse de chalumeau selon la revendication 4 ou 5, caractérisée en ce qu'il est prévu sur les deux grands côtés de la fente à oxygène (4) des ouvertures de gaz combustible (5) limitées à la longueur de celle-ci.

7. Buse de chalumeau selon une quelconque des revendications 4 à 6, caractérisée en ce qu'il est prévu sur les deux grands côtés des buses rondes (8) simples afin de refouler le laitier.

8. Buse de chalumeau selon la revendication 7, caractérisée en ce qu'un courant d'oxygène sort par les buses rondes (8).

9. Buse de chalumeau selon la revendication 7, caractérisée en ce que de la vapeur et/ou de l'eau sortent par les buses rondes (8).

10. Buse de chalumeau selon la revendication 7, caractérisée en ce qu'un courant d'air comprimé sort par les buses rondes (8).

11. Buse de chalumeau selon une quelconque des revendications 1 à 8, caractérisée en ce que la fente à oxygène (4) s'étend sous un angle de 45° par rapport aux bords de la pièce (1).

12. Buse de chalumeau selon une quelconque des revendications 4 à 11, caractérisé en ce que la fente à oxygène (4) fait un angle de 30° avec le plan de déplacement.

## Fig 1

## Fig.2